# EUROPEAN PATENT APPLICATION

(11) **EP 3 410 550 A1**
(43) Date of publication of application: **05.12.2018**
(21) Application number: 18172923.7
(22) Date of filing: 17.05.2018
(51) Int. Cl.: H02G 3/08, H02G 3/22

(54) **CABLE FEEDTHROUGH ELEMENT AND FRAME**

(30) Priority: 29.05.2017 FI 20175481
(71) Applicant: Trelleborg Industrial Products Finland OY, 38300 Sastamala (FI)
(72) Inventor: Aurasto, Orko, 38360 Sastamala (FI)
(74) Representative: Papula Oy

(57) **Abstract**

The invention relates to a feedthrough element for passing cables in a sealed fashion through a partition. The feedthrough element comprises a first body consisting of compressible material and comprising a first interface and a second body consisting of compressible material and comprising a second interface. The first interface and the second interface are adapted to be pressed against each other to form one or more annular holes for passing a cable through the feedthrough element. The feedthrough element also comprises a plurality of flexible annular collars for providing a plurality of sealing contacts with the cable, the collars being located within each of the one or more holes. The invention additionally relates to one or more feedthrough elements in a frame.

## Description

### FIELD OF THE INVENTION

The present invention relates to a feedthrough arrangement for passing cables in a sealed fashion through a partition such as a wall or a casing.

### BACKGROUND OF THE INVENTION

When cables are passed through partitions, care must be taken to seal the interface from water, dust or other particles or objects permeating the opening. This may become especially important, when the partition forms a wall of casing, for example an electrical cabinet, housing sensitive equipment. In many applications, several cables may need to be fed through a given partition, in which case it may be practical to have a single arrangement permitting the feedthrough of multiple cables.

Various different kinds of feedthrough arrangement exist for which the details of the design depend on the particular requirements set by the field of application. For example, the applicability of a particular design for practical use may depend on various factors such as its adaptability, cost of fabrication and ease of installation. On the other hand, the arrangement still needs to meet the required levels of sealing effectiveness which for electrical enclosures is characterized by the International Protection Marking (standard SFS-EN 60529, IEC 60529).

In addition to issues related to achieving a desired sealing performance, various problems may arise in the installation situation, which may often be performed in difficult conditions. For example, it may be advantageous to provide an arrangement where the need to use both hands to perform the installation is relaxed. It is of further advantage, if the arrangement can provide a way to install cables of varying diameters but at the same time may relax the need for the person performing the installation to carry a large number of installation pieces of different sizes to prevent a situation where a piece of desired diameter is missing. Further problems may arise, when cables include connectors. Since the connectors typically have diameters larger than that of the cable, they cannot usually be simply pushed through the feedthrough arrangement.

### OBJECTIVE OF THE INVENTION

An objective of the invention is to eliminate at least some of the drawbacks of the prior art referred to above. In particular, an objective of the invention is to disclose a feedthrough element and a frame which may be flexibly and reliably used for different cable sizes even in the case that the cables include connectors. Furthermore, an objective of the invention is to disclose a feedthrough element and a frame that can be manufactured cost-efficiently and which is easy to install.

### SUMMARY OF THE INVENTION

The feedthrough element and the frame according to the invention are designed for passing cables in a sealed fashion through a partition, such as a casing, a wall of a construction, a junction box or a low-voltage switchgear. In particular, the arrangement disclosed herein may be used for passing cables through electrical enclosures.

According to the disclosure, a feedthrough element is manufactured from bodies of compressible material. Consequently, the feedthrough element may be compressed throughout its entire height, width or both to seal a passage, a procedure which is not possible for rigid or semi-rigid elements such as rigid plastic. This allows the feedthrough element to be used in a rigid frame, which mechanically compresses one or more feedthrough elements within the frame. In particular, compressibility of the feedthrough element may allow the insertion of the feedthrough element in a frame of fixed size so that feedthrough elements may be installed in the frame by squeezing. It may, however, be possible to use frames which may be opened and closed to exert pressure on the feedthrough element.

For adaptability, the disclosed feedthrough element may be used in several variable ways. A single feedthrough element comprises two bodies, which may be matched against each other to create one or more holes for passing cables through. As the element consists of two bodies, it may be opened to allow passage for cables with connectors. Together, the two bodies form a single unit, i.e. the feedthrough element, which may comprise a selected number of feedthrough holes having equal or varying sizes. A single feedthrough element may be enclosed in a frame for compression or a frame may enclose a plurality of feedthrough elements. In particular, the feedthrough elements as disclosed may be used as modular blocks to be compressed against each other. Since the feedthrough elements are thoroughly made of compressible material, they may be used to distribute pressure within the whole volume of the element. When the feedthrough element is in use, all the holes may be blocked either by cables or plugs matching the shape of the holes. The plugs may be fixedly connected to the feedthrough element so that a correctly sized plug is always readily available for the person installing the feedthrough improving the speed and ease of installation.

The construct and geometry of the feedthrough element enable the feedthrough element to be easily compressed in a sealing fashion in one or more perpendicular dimensions throughout their whole volume. The sealing contact may therefore be achieved without using lubricants on the outer surface of the feedthrough element or in the holes. Additionally, the construct and geometry of the feedthrough element allow modular use. The feedthrough element may be adapted to provide variability for the range of opening diameters while at the same time reduce the number of different feedthrough elements to be carried by the installer. The latter, in particular, may be achieved by a plurality of flexible collars formed in the holes of the feedthrough element. The collars bend or compress against the cable to allow variation in cable diameter. The collars may also act as a strain relief and their across the length of a single hole may be increased to improve the sealing contact. The feedthrough element may be constructed so that it is ready for use and there is no need to alter the dimension of the feedthrough elements during installation, for example by removing material from the elements to adjust the size of the holes.

In an aspect, a feedthrough element for passing cables in a sealed fashion through a partition comprises a first body consisting of compressible material and comprising a first interface and a second body consisting of compressible material and comprising a second interface. The first interface and the second interface are adapted to be pressed against each other to form one or more annular holes for passing a cable through the feedthrough element. The feedthrough element also comprises a plurality of flexible annular collars for providing a plurality of sealing contacts with the cable, the collars being located within the one or more holes.

The flexible annular collars are specifically adapted for cables of varying diameter to be sealingly passed through a single hole, i.e. one of the one or more annular holes of the feedthrough element. This means that each single hole of the one or more annular holes is adapted for at least two differently sized cables to be sealingly passed through them, i.e. each single hole is adapted for sealing contact with two or more cables having different diameters, i.e. nominal diameters. That means that each single hole is adapted for variation in the nominal diameter of the cable to be sealingly passed through it. This allows the number of different types of feedthrough elements covering a range of cable sizes to be reduced so that only a limited number of feedthrough elements need to be delivered to an installation site, in particular when the sizes of the cables to be installed is not known beforehand. The variation may be one millimeter or more, for example at least 1-3 millimeters for each single hole. This is made possible by the material and construction of the collars. Moreover, the material and construction of the collars and the feedthrough elements allows the sealing contact to be effected with relatively small force. This way, the feedthrough elements are adapted to be sealingly closable by hand, i.e. without the application of compressors such as jacks or squeezers. While the feedthrough elements may still be embedded in a compressing frame, the frame may be adapted to be sealingly closable by hand as defined above. There is therefore no need to use bulky constructions such as jacks or screw clamps for sealingly closing the feedthrough element and/or a frame comprising one or more feedthrough elements. Instead, they may be sealingly closed by hand and only secured with screws, facilitating easier installation especially in difficult conditions.

It is noted that only a few collars may be required to obtain a sealing performance exceeding a desired threshold. Consequently, the collars may be positioned along the one or more holes so that the sealing performance is optimized. They may be positioned substantially evenly or unevenly, depending on the application. Often, there may be a space between some or all adjacent collars. The length of the space, in the direction along the hole, i.e. the longitudinal direction of the hole or the cable to be passed through the hole, may be larger than the length of the collar, for example two or more times as large.

The construction of the feedthrough element allows variation in the nominal diameter of the cable without any addition or removal of material in the feedthrough element, e.g. the feedthrough element may be adapted for variation in the nominal diameter solely by through collars. The first body and the second body may both be uniform bodies. The first body and/or the second body may be substantially shaped as a cuboid. It may be substantially rectangular, e.g. a rectangular cuboid. When pressed against each other at the first and the second interface, the first and the second body may form a substantially rectangular block. The block may thus essentially consist of two uniform pieces, although it is possible that also these pieces are integrally connected to each other to form a single monolithic piece. The first and the second interface may be substantially flat for making a sealing contact with each other. The first body and/or the second body may also comprise a rear interface on the opposite side of the first or the second interface. The rear interface may be substantially flat for making a sealing contact with another flat surface such as a flat wall of a frame or a flat interface, e.g. a rear interface, of another feedthrough element.

In a further implementation form, a feedthrough element comprises means for removably coupling the first body to the second body. This enables opening the feedthrough element so that cables having connectors may be passed through. By making the coupling removable, need for additional means of attachment is removed, which allows the feedthrough element to be made both compact. In particular, this enables the sides of the feedthrough element to be adapted to function as interfaces for compression.

In a further implementation form, the means for removably coupling the first body to the second body comprise at least one projection extending from the first body or the second body and at least one corresponding recess arranged in the second body or the first body for preventing the relative movement of the first body and the second body in at least one direction when the projection is placed in the corresponding recess. Using projections and corresponding recesses, where the shape of the recess may be matched to the shape of the projection, enables the coupling to be hidden within the bodies of the feedthrough element. Moreover, when the shapes of the projections and the recesses match each other, the feedthrough element compactly fills a volume so that the whole volume may function as a compressible sealing contact.

In a further implementation form, at least one of the first body and the second body comprises means for removably coupling the feedthrough element to a frame or to another feedthrough element. The removable coupling with respect to a frame improves the ease of use for the feedthrough element as it removes the requirement for the installer to hold the element during installation. The removable coupling with respect to another feedthrough element enables modular construction and use for the feedthrough elements so that a plurality of feedthrough elements may be combined to form a feedthrough arrangement having a variety of holes, for example differing in diameter. The particular means for coupling the further feedthrough element to a frame may differ from those used to another feedthrough element. However, the means may also be the same further improving modularity of the arrangement.

In a further implementation form, the means for removably coupling the feedthrough element to a frame or to another feedthrough element comprise at least one of a projection or a recess. Using projections and corresponding recesses, where the shape of the one or more recesses in one feedthrough element may be matched to the shape of one or more projections in one or more additional feedthrough elements, or vice versa, enables the coupling to be hidden within the bodies of the feedthrough elements. Moreover, when the shapes of the projections and the recesses match each other, the feedthrough elements compactly fill a volume so that the whole volume may function as a compressible sealing contact.

In a further implementation form, the spacing of the plurality of collars varies along the length of the one or more holes. This allows adjusting the sealing characteristics and/or the grip of the feedthrough. The collars may, for example, have a closer spacing in one end of the hole, for example the one to be placed or adapted to be placed next to an interior space, and a wider spacing in another, for example the one to be placed or adapted to be placed next to an exterior space.

In a further implementation form, the feedthrough element comprises a plurality of holes arranged in the first body and in the second body in an alternating manner so that the central axes of each pair of adjacent holes are located on different sides of the interface separating the first body and the second body. This enables close packing of the holes so that number of holes on a surface may be increased.

In a further implementation form, the feedthrough element comprises a plurality of holes arranged so that the central axes of each hole is located on the same side of the interface separating the first body and the second body. This enables reducing the width of one of the bodies since no holes need to be placed there.

In a further implementation form, the feedthrough element comprises one or more plugs for sealing the one or more holes, wherein the plugs are connected to the feedthrough element by flexible projections. This allows the plugs of correct size, the shape of which may be matched with that of the holes, to be readily available thus improving the ease of use. This is particularly helpful when the size of the holes, and thus also the plugs, is small. The connection between the plugs and the feedthrough element also prevents the plugs from getting lost before, during or after installation.

In a further implementation form, the compressible material is thermoplastic elastomer, silicone or rubber. This allows compressible sealing contact in a cost-efficient manner. The material may be chosen to have the characteristics suitable for a specific application. For example, silicone may be used to provide protection against heat.

In a further implementation form, the width of the collar is 1-3 millimeters. This allows a variation of a few millimeters in the cable thickness while maintaining the sealing the contact.

In a further implementation form, the feedthrough element has an Ingress Protection rating of at least 54. This allows tightness of the sealing contact with respect to ingress from both water and particles such as dust.

In a further implementation form, the feedthrough element further comprises a third body consisting of compressible material and comprising a third interface. In this implementation form, the first body further comprises a rear interface, located on the side of the first body that is opposite to the first interface. The third interface and the rear interface are adapted to be pressed against each other to form one or more additional annular holes for passing a cable through the feedthrough element. As in the holes formed between the first body and the second body, a plurality of flexible annular collars for providing a plurality of sealing contacts with the cable may also be located within the additional holes. The third body allows two rows of feedthrough points to be formed in a single element using three blocks.

In an aspect an arrangement for passing cables in a sealed fashion through a partition comprises one or more feedthrough elements according to the first aspect or any of the further implementation forms. The arrangement additionally comprises a frame having at least one of its dimensions arranged for compressing the one or more feedthrough elements in the at least one dimension. This enables both a single feedthrough element and any cables, holes or plugs within it to be compressed to form a sealing contact and also two or more feedthrough elements to be compressed against each other. Within a frame, a variety of feedthrough elements may be installed for modularity and adaptability. When the dimensions of the frame are arranged for compressing the feedthrough elements, no additional clamp or screw is required improving the ease of use, ease of manufacture and cost-efficiency of the arrangement.

In a further implementation form, the frame comprises means for opening and closing the frame. This enables the frame itself to be used as a pressing device.

In a further implementation form, the arrangement comprises two or more feedthrough elements are adapted to be arranged in two rows within the frame, at least along a part of the width of the frame. For the remainder of the width of the frame, taller feedthrough elements comprising either two or three bodies may be used so that a single feedthrough element fills the height of the frame. Placing the feedthrough elements in two rows allows them to be compressed at one side against each other and at the other side against the frame so that a sealing contact may be formed. The configuration in two rows allows for modularity and may also be used in an installation setting for example so that both rows are connected at one end to the frame, improving the ease of use. The arrangement adapts also to the use of taller feedthrough elements in one row, which can be compressed in one dimension from both sides by the frame.

It is to be understood that the aspects and embodiments of the invention described above may be used in any combination with each other. Several of the aspects and embodiments may be combined together to form a further embodiment of the invention.

### LIST OF FIGURES

The accompanying drawings, which are included to provide a further understanding of the invention and constitute a part of this specification, illustrate embodiments of the invention and together with the description help to explain the principles of the invention. In the drawings:
Figs. 1a-b illustrate a feedthrough element from two perspective views.
Figs. 1c-d further illustrate a first body and a second body of a feedthrough element, respectively.
Figs. 2a-b illustrate another feedthrough element from two perspective views.
Figs. 3a-b illustrate yet another feedthrough element from two perspective views.
Figs. 4a-b illustrate a feedthrough arrangement from two perspective views.
Figs. 5a-b illustrate another feedthrough arrangement from two perspective views.
Figs. 6a-c illustrate yet another feedthrough arrangement from two perspective views and a rear view, respectively.
Figs. 7a-b illustrate a feedthrough element from two perspective views.
Figs. 8a-b illustrate a feedthrough arrangement from two perspective views.

Like references are used to designate like parts in the accompanying drawings.

### DETAILED DESCRIPTION OF THE INVENTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

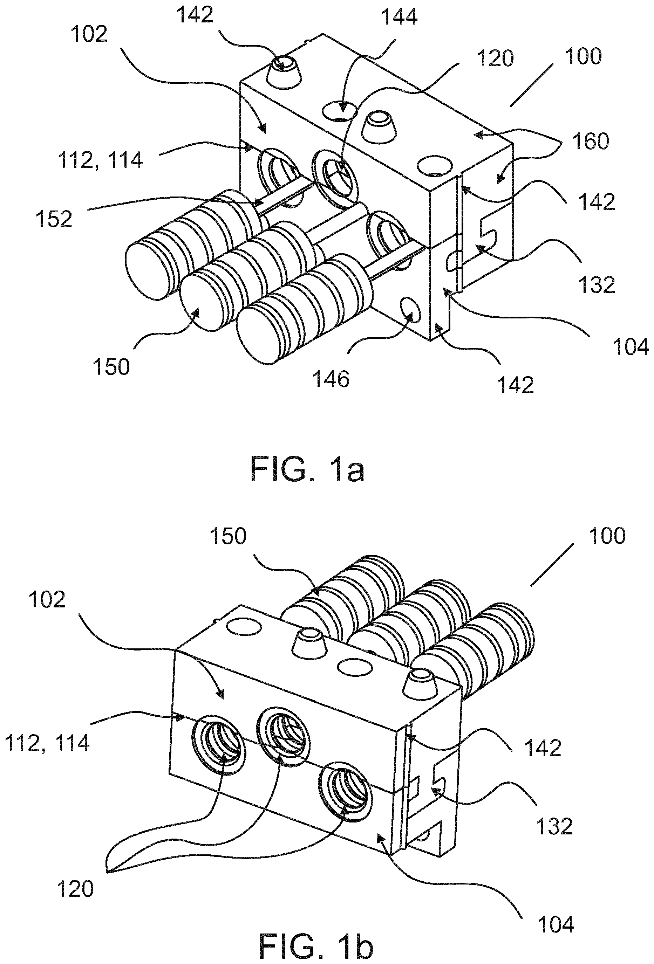

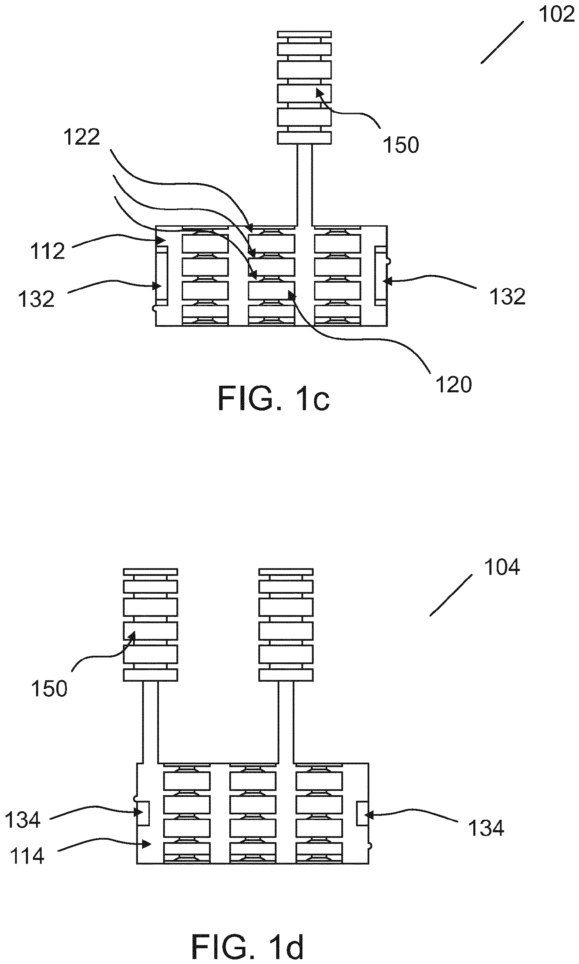

Figs. 1a-b illustrate a feedthrough element 100. The feedthrough element 100 comprises two bodies: a first body 102 and a second body 104, which are both made of compressible material. The bodies 102, 104 may be made of the same material so that any compression forces acting on the feedthrough element 100 may be uniformly distributed within the volume of the feedthrough element 100. The bodies 102, 104 have interfaces 112, 114, which may be pressed against each other to form one or more annular through-holes 120 in the feedthrough element 100 for sealingly passing cables. The number, diameter and position of the holes 120 may be adjusted to provide the desired variety of feedthrough points, while at the same time maintaining sufficient volume of the feedthrough element 100 to enable the compression to yield a sealing contact. For example, the number of holes 120 may be from one to six. A single feedthrough element 100 may comprise holes 120 having different diameters, for example 1-15 millimeters. The shapes of the interfaces 112, 114 may be matched with each other so that the sealing contact between the bodies 102, 104 becomes tight. The interface 112, 114 separating the bodies 102, 104 may be positioned tangential to the annular holes 120 to improve the sealing contact. Views of the bodies 102, 104 from directions facing the interfaces 112, 114 are illustrated in Figs. 1c-d.

In the holes 120, a plurality of annual collars is 122 is formed so that cables of varying diameter may be sealingly passed through a single hole 120. A hole 120 may contain two or more collars 122, for example from three to six collars 122, to obtain the desired ingress prevention characteristics. The spacing of the plurality of collars may vary along the length of the holes. Collars 120 may be included in each hole 120 to allow cable-size variation for all feedthrough points. When the cable diameter is, for example, 1-15 millimeters, a single hole 120 may be arranged for a variation of 1-3 millimeters. This may be achieved with collars 122 having thickness of substantially 1-3 millimeters. The collars 122 may be of the same compressible material as the bodies 102, 104 so that together they form a monolithic piece.

In an embodiment, the feedthrough element 100 comprises means 132, 134 for removably coupling the first body 102 to the second body 104. The means may comprise one or more projections 132 extending from the first body 102 and corresponding recesses 134 in the second body 104 so that the coupling prevents relative movement of the bodies 102, 104 at least in one direction. The coupling is removable so that the bodies 102, 104 may be separated from each other and a cable having a connector may be inserted between them.

In an embodiment, the feedthrough element 100 comprises means 142, 144 for removably coupling the feedthrough element to another feedthrough element or to a frame. The other feedthrough element may also be a solid feedthrough element, i.e., one comprising no holes 120, which may act as a filling element in an opening. The means may comprise one or more projections 142 or recesses 144. The coupling is removable so that the feedthrough elements 100 may be modularly combined with each other and/or a frame. The removable coupling with the frame additionally allows the feedthrough element 100 to be positioned with respect to the frame during installation.

Similar types of projections 132, 142 and recesses 134, 144 may be used both for coupling the bodies 102, 104 of a single feedthrough element 100 to each other and for coupling a feedthrough element 100 to other feedthrough elements or to a frame. The projections 132, 142 may be shaped as bumps, for example tapered bumps, ridges or tabs. For example, the projections 142 for attaching feedthrough elements 100 to a frame may comprise yet additional recesses or through-holes 146 for attachment. A recess 134, 144 may have the same shape as the corresponding projection 132, 142.

The projections may extend from the surface of a body 102, 104 of the feedthrough element 100 perpendicularly or in parallel. In particular, perpendicularly extending projections may be used to hide the coupling within feedthrough elements 100 or a frame. Projections extending in parallel may be used to provide a flat coupling surface on the side of a feedthrough element 100 so that the feedthrough element 100, and the flat coupling surface in particular, may be sealingly compressed against another feedthrough element 100.

The shape of the feedthrough element 100 may be substantially rectangular. This enables the feedthrough elements 100 to be modularly combined to sealingly fill a space. However, also other shapes may be used. The feedthrough element 100 comprises one or more sides 160 perpendicular to holes, i.e. the direction of cable passage. In the example of rectangular geometry, the number of such sides 160 is four. The side interfaces 160 may be substantially flat apart from means of coupling the feedthrough element 100 to another feedthrough element or to a frame. When the side interfaces 160 consist solely of the means of coupling and a flat surface, the side interfaces 160 may be compressed against the corresponding, shape-matched, side surface of another feedthrough element or the interior surface of a frame 202 to create a sealing contact. As illustrated in Figs. 1a-b, the means of coupling 132 may be integrated on a flat side interface 160 of a feedthrough element 100, for example by die-cutting. Similar coupling arrangement, for example a tab 132 as illustrated, may be used also to couple two feedthrough elements 100 together. In this case, the corresponding means of coupling may be integrated to the adjoining side interfaces of the coupled feedthrough elements, for example by using one projection extending in parallel from the first feedthrough element and a recession of matching shape in the second feedthrough element, so that when the projection is placed in the recession, the joint side interface is flat.

The means for coupling may be symmetrically placed on at least two opposite sides 160 of a feedthrough element 100 so that a projection on one side corresponds to a recess on the other side. This enables a single geometry to be modularly used for coupling two adjacent feedthrough elements 100 to each other. By using at least two coupling elements, where a coupling element may be for example a projection or a recess, on one side 160 of a feedthrough element 100, the feedthrough element 100 may be adapted for sealingly couple that side 160 with two or more other feedthrough elements.

Holes 120 which are not used for passing cables are filled with plugs 150 to prevent ingress. The plugs may be of compressible material 150, for example the same material as the bodies 102, 104 of the feedthrough element 100 to make the compression characteristics as uniform as possible across the volume of the feedthrough element 100. The plugs 150 may be shaped to match the shape of the holes 120 to improve the tightness of the feedthrough. They may comprise grooves matching the collars 122 within the holes 120. The plugs 150 may be separate from the bodies 102, 104 of the feedthrough element 100 but, alternatively, they may be connected to the feedthrough element 100 with flexible projections 152. This enables a correctly sized plug to be readily available and prevents the loss of plugs. The plugs 150 and the projection 152 may be of the same material as the body 102, 104 to which they are attached so that the plug 150, the projection 152 and the body 102, 104 together form a monolithic piece.

As it has been disclosed that the bodies 102, 104 of a feedthrough element 100 are made of compressible material, it is noted that the same material may be used for any or all the other part of the feedthrough element 100. This way, the components of the feedthrough element 100 may be fabricated in one step, for example by injection molding, so that each of the bodies 102, 104, including any additional features, forms a monolithic piece. The compressible material may be one which allows compressibility in one dimension without significantly expanding in any other. In an embodiment, the compressible material is thermoplastic elastomer, silicone or rubber. The feedthrough elements 100 may have a height of 10-80 millimeters, for example of 10-50 millimeters, and a width of 10-200 millimeters, for example of 10-100 millimeters.

In an embodiment, the feedthrough element 100 has an Ingress Protection rating of at least 54. The rating characterizes the materials and the geometry of the feedthrough element 100 that produce the sealing contact for both solids and liquids.

In an embodiment, the feedthrough element 100 comprises at least two holes 120 and the holes are arranged in the first body 102 and in the second body 104 in an alternating manner so that the central axes of each pair of adjacent holes are located on different sides of the interface 112, 114 separating the first body 102 and the second body 104. Additionally, the interface 112, 114 separating the bodies 102, 104 may form a substantially straight line. The interface 112, 114 separating the bodies 102, 104 may be positioned tangential to the annular holes 120 to improve the sealing contact.

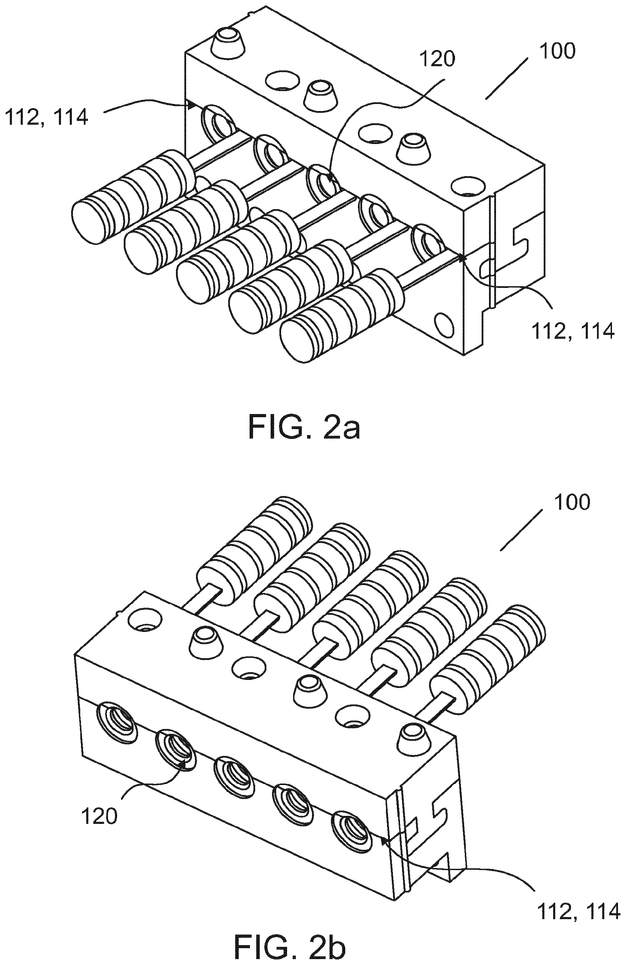

In Figs. 2a-b, a feedthrough element 100 comprising a plurality of holes 120 is illustrated. The number of holes 120 is at least two so that they may be arranged so that the central axes of each hole 120 is located on the same side of the interface 112, 114 separating the first body 102 and the second body 104. Additionally, the central axes of the holes 120 may be positioned substantially along the same line. The interface 112, 114 separating the bodies 102, 104 may be positioned tangential to the annular holes 120 to improve the sealing contact.

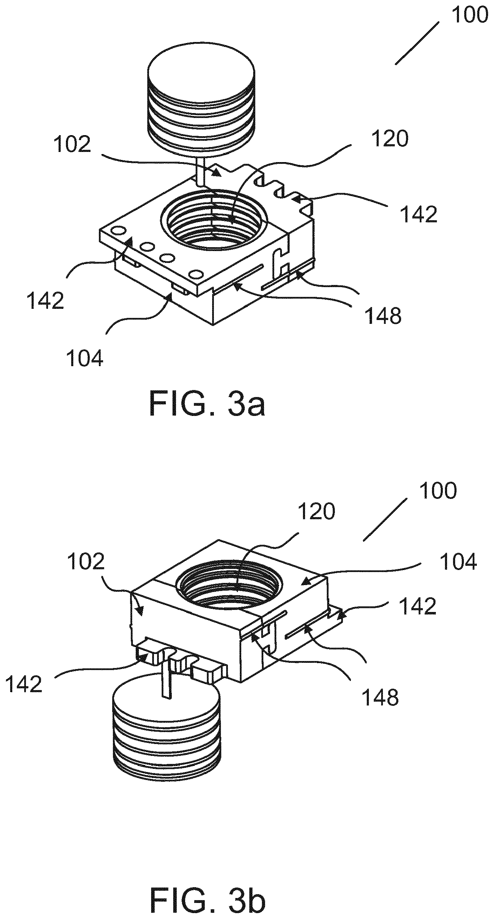

In Figs. 3a-b, a feedthrough element 100 comprising a single hole 120 is illustrated. Regardless of the number of holes, when the feedthrough element 100 is, in at least one dimension, large enough to fill a frame by itself, both the first 102 and the second body 104 may comprise means 142 for coupling the feedthrough element 100 to a frame, located at the opposite sides of the feedthrough element 100. The feedthrough element 100 may additionally comprise means 148 that are arranged for coupling the feedthrough element 100 both to a frame and to another feedthrough element. Such means may naturally be used also in connection with feedthrough elements 100 of other sizes.

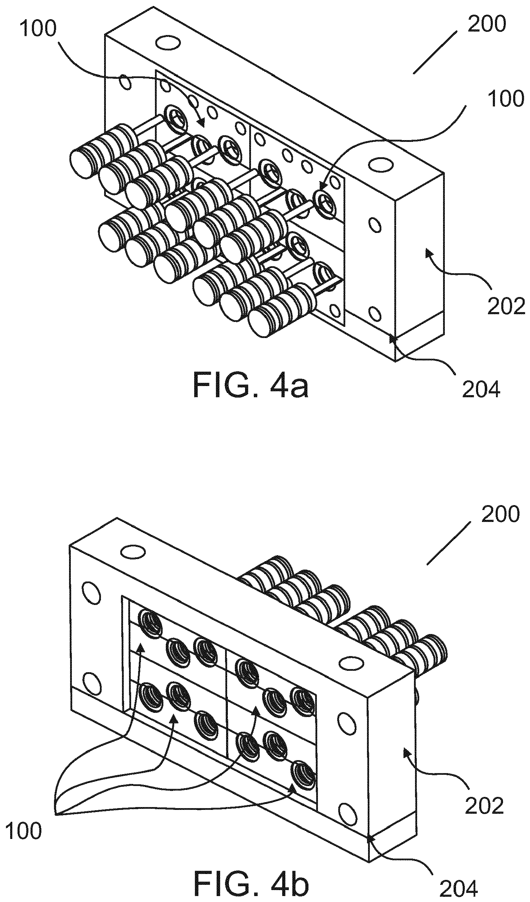

Features related to construction of a feedthrough arrangement 200 are presented using examples illustrated in Figs. 4a-b, 5a-b and 6a-c. Since the examples comprise various alternative combinations for feedthrough element 100 and frame geometries 202, it should be understood that one or more features presented in relation to one figure may be combined with one or more features presented in relation to another figure.

In Figs. 4a-b, an arrangement 200 for passing cables in a sealed fashion through a partition is illustrated. The arrangement 200 comprises one or more feedthrough elements 100 as described above and a frame 202. The frame is made of rigid material so that it may be used to compress the feedthrough elements 100 against each other and against the frame 202 for a sealing contact. The frame 202 may be made of a single piece in which case the feedthrough elements 100 are installed by pressing them inside the frame 202. Since the elements 100 are compressible throughout their whole volume, no additional tightening devices are required. As an alternative, the frame 202 may also comprise means for opening and closing the frame 204 such as hinges, snap-in locks, bolts or screws. The frame 202 may also consist of multiple separate pieces, for example of two pieces, which may be removably attached together, for example by a snap-in mechanism or by screws. The feedthrough elements 100 within the frame 202 may be selected before or during installation and they may be modularly exchanged. This enables changing the feedthrough geometry also after the initial installation. The feedthrough elements 100 may be positioned in two rows within the frame 202, at least along a part of the width of the frame 202, to allow each feedthrough element 100 to be compressed, at least in the direction perpendicular to the rows and the holes, both by the frame 202 and the adjacent feedthrough element 100 so that the number of modular feedthrough elements 100 within the frame 202 may be maximized while all the elements 100 remain, at the same time, locked in place by the frame 202. One or more points of opening may be located at the bottom of the frame 202 as illustrated so that all the feedthrough elements 100 may be positioned within a single frame piece before closing the frame 202. The pieces of the frame may be connected with a hinge or they may be completely detachable. Alternatively, one or more points of opening may also be located at other places such as at the side of the frame 202 or at the middle of the frame 202. A point of opening may additionally be located so that it coincides with an interface between rows of feedthrough elements 100.

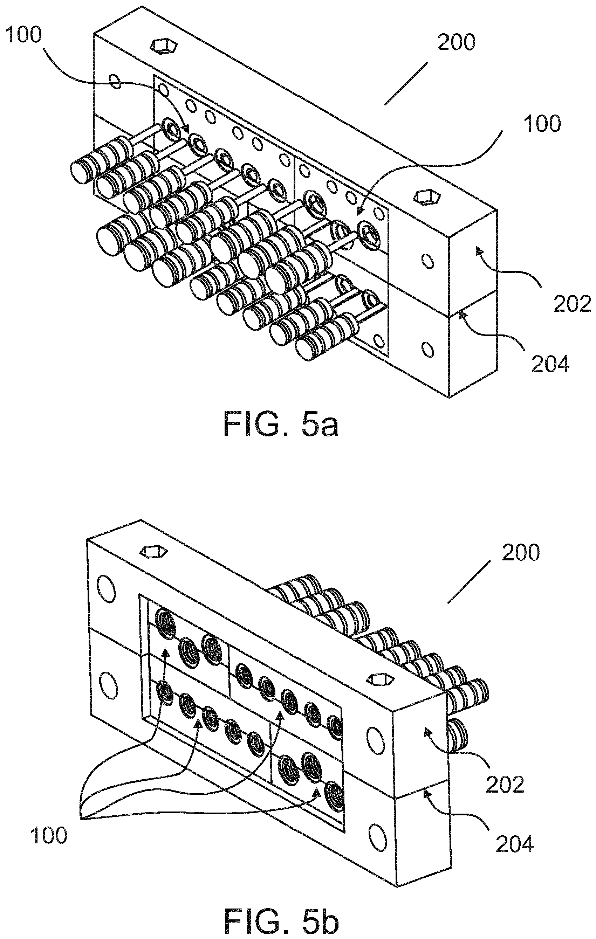

In Figs. 5a-b, a feedthrough arrangement 200 comprising a plurality of feedthrough elements 100 and a frame 202 is illustrated. The feedthrough elements 100 may comprise different hole sizes and geometries. Due to modularity of the coupling means, the feedthrough elements 100 may be stacked on top of each other and sealingly coupled in various configurations. In particular, the feedthrough elements 100 are adapted for sealingly coupling one side of a single feedthrough element 100 to two or more additional feedthrough elements, some of which may be solid feedthrough elements. The frame 202 may be opened and closed and two points of opening are located at the middle and at the opposite sides of the frame 202 so that they coincide with the interface between rows of feedthrough elements 100.

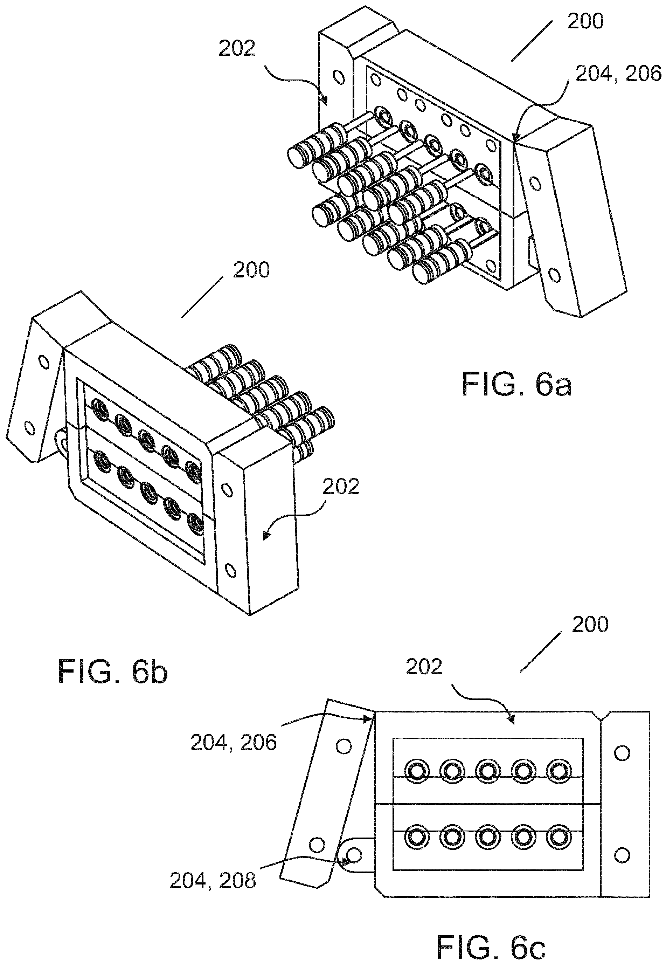

In Figs. 6a-c, another feedthrough arrangement 200 comprising a plurality of feedthrough elements 100 and a frame 202 is illustrated. In this example, the frame 202 comprises one or more hinges 206 as means 204 which allow the frame 202 to be opened and closed. Two points of opening are located along the middle line of the frame, coinciding with the interface between two rows of feedthrough elements 100. Additionally, the frame 202 comprises a locking mechanism 208 to lock the frame 202 in place and apply compression to the feedthrough elements 100. Similar hinge 206 and locking mechanism 208 may be included on the other side of the frame 202. The locking mechanism 208 may be, for example, a snap-lock or a screw-in lock. The frame 202 may be constructed as two identical pieces symmetrically coupled together to facilitate ease of manufacture and installation. While this applies specifically to frame geometries illustrated in Figs. 5a-5b and 6a-c, it should be understood that other symmetrical frame geometries are also possible.

In all of the example arrangements, the frame 202 may additionally comprise means for attaching it to a partition. These means may comprise, for example, holes, grooves, screw inlets, screws or bolts. The frame may have a height of 20-80 millimeters, for example of 30-50 millimeters, and a width of 20-200 millimeters, for example of 50-100 millimeters.

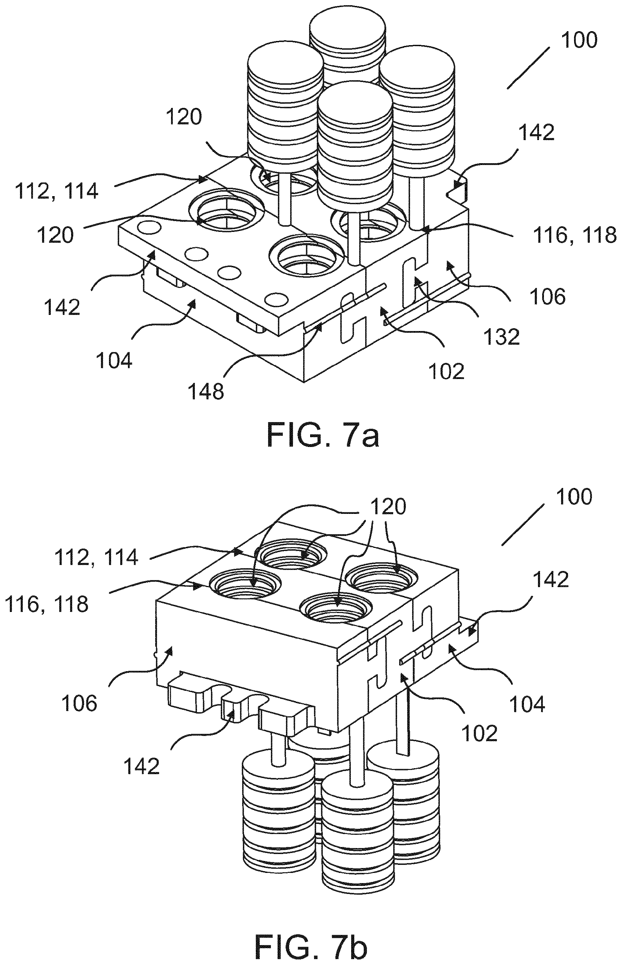

In Figs. 7a-b, a feedthrough element 100 comprising a third body 106 made of compressible material is illustrated. The third body 106 comprises a third interface 116 adapted to be pressed against a rear interface 118 in the first body 102 to form one or more additional annular holes 120 for passing a cable through the feedthrough element 100. The rear interface 118 is formed in the first body 102 on the side that is opposite to the side of the first interface 112 so that the first body 102, second body 104 and the third body are positioned consecutively, the first body 102 being squeezed between the two other bodies 104, 106. Consequently, there forms a first separating interface 112, 114 between the first body 102 and the second body 104 and a second separating interface 116, 118 between the first body 102 and the third body 106. This allows for a modular geometry providing two rows of feedthrough holes 120 using three feedthrough element bodies 102, 104, 106. In this geometry, the second body 104 and the third body 106 may be both adapted to be removably coupled with a frame, for example using means 142 such as one or more projections and/or recesses in the bodies.

The third body 106 may be the same material as the first body 102 or the second body 104. Also in other respects, the features described above in connection with the two-body feedthrough element 100 may be adapted to the three-body feedthrough element 100. For example, the three-body feedthrough element 100 may comprise means 148 adapted for removably coupling the feedthrough element both to a frame and to another feedthrough element. The coupling between the third body 106 and the first body 102 may also take place using similar means 132 as which have been described in relation to the coupling between the first body 102 and the second body 104. Also other details of the feedthrough element 100 such as the geometry of the separating interfaces or the construction and structure of the collars and/or the plugs may also be applied to the three-body feedthrough element in a similar manner as in the two-body feedthrough element.

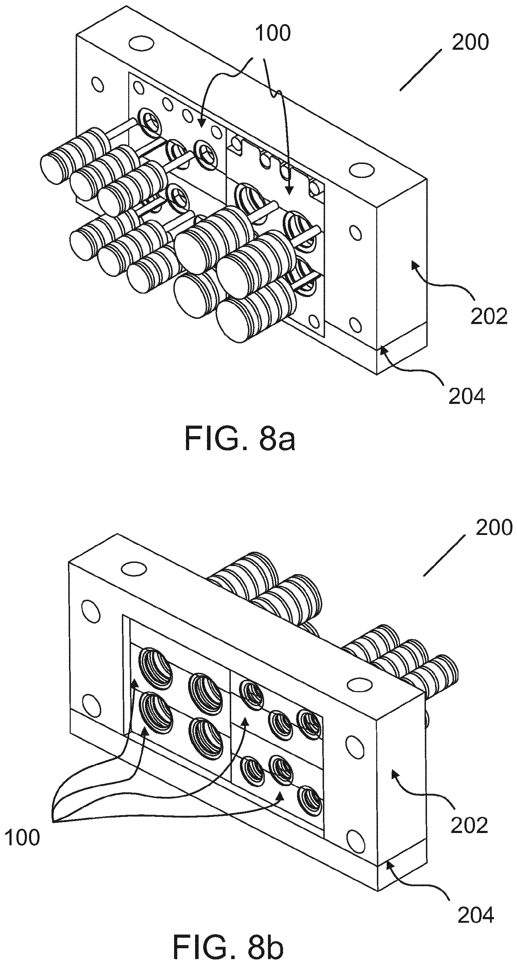

In Figs. 8a-b, an arrangement 200 for passing cables in a sealed fashion through a partition is illustrated. In the example, both two-body and three-body feedthrough elements 100 have been utilized. The feedthrough elements 100 are compressed within a frame 202, which may comprise means 204 opening and closing as described above. In an embodiment, feedthrough elements 100 may be placed in one or two rows along the width of the frame 202. In particular, two-body feedthrough elements may be placed in one or two rows, depending on their size, whereas three-body feedthrough elements may be placed in one row so that they are directly compressed by the frame from two sides. The arrangement 200 allows both adjustability in the available feedthrough points and ease of installation. The feedthrough elements 100 may additionally contain means for removably coupling the feedthrough elements 100 to each other and/or to the frame 202.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A feedthrough element for passing cables in a sealed fashion through a partition, wherein the feedthrough element (100) comprises:
a first body (102) consisting of compressible material and comprising a first interface (112);
a second body (104) consisting of compressible material and comprising a second interface (114); wherein the first interface (112) and the second interface (114) are adapted to be pressed against each other to form one or more annular holes (120) for passing a cable through the feedthrough element (100); and
located within the one or more holes (120), a plurality of flexible annular collars (122) for cables of varying diameter to be sealingly passed through a single hole (120); wherein a single hole (120) is arranged for variation of 1-3 millimeters.

2. A feedthrough element according to claim 1 further comprising means (132, 134) for removably coupling the first body (102) to the second body (104) .

3. A feedthrough element according to claim 2 wherein the means (132, 134) for removably coupling the first body (102) to the second body (104) comprise at least one projection (132) extending from the first body (102) or the second body (104) and at least one corresponding recess (134) arranged in the second body (104) or the first body (102) for preventing the relative movement of the first body (102) and the second body (104) in at least one direction when the projection (132) is placed in the corresponding recess (134) .

4. A feedthrough element according to any of the preceding claims wherein at least one of the first body (102) and the second body (104) comprises means (142, 144) for removably coupling the feedthrough element (100) to a frame (202) or to another feedthrough element (100).

5. A feedthrough element according to claim 4 wherein the means (142, 144) for removably coupling the feedthrough element (100) to a frame (202) or to another feedthrough element (100) comprise at least one of a projection (142) or a recess (144).

6. A feedthrough element according to any of the previous claims wherein the spacing of the plurality of collars (122) varies along the length of the one or more holes (120).

7. A feedthrough element according to any of the previous claims wherein the feedthrough element (100) comprises a plurality of holes (120) arranged in the first body (102) and in the second body (104) in an alternating manner so that the central axes of each pair of adjacent holes (120) are located on different sides of the interface (112, 114) separating the first body (102) and the second body (104).

8. A feedthrough element according to any of the previous claims wherein the feedthrough element (100) comprises a plurality of holes (120) arranged so that the central axes of each hole (120) is located on the same side of the interface (112, 114) separating the first body (102) and the second body (104).

9. A feedthrough element according to any of the previous claims further comprising one or more plugs (150) for sealing the one or more holes (120); wherein the plugs (150) are connected to the feedthrough element (100) by flexible projections (152) .

10. A feedthrough element according to any of the previous claims wherein the compressible material is thermoplastic elastomer, silicone or rubber.

11. A feedthrough element according to any of the previous claims wherein the width of the collar (122) is 1-3 millimeters.

12. A feedthrough element according to any of the previous claims having an Ingress Protection rating of at least 54.

13. A feedthrough element according to any of the previous claims further comprising a third body (106) consisting of compressible material and comprising a third interface (116); wherein the first body (102) further comprises a rear interface (118), located on the side of the first body (102) that is opposite to the first interface (112), the third interface (116) and the rear interface (118) being adapted to be pressed against each other to form one or more additional annular holes (120) for passing a cable through the feedthrough element (100).

14. An arrangement for passing cables in a sealed fashion through a partition, wherein the arrangement (200) comprises one or more feedthrough elements (100) according to any of the previous claims and a frame (202); the frame (202) having at least one of its dimensions arranged for compressing the one or more feedthrough elements (100) in the at least one dimension.

15. An arrangement according to claim 14, wherein the frame (202) comprises means for opening and closing the frame (202).

16. An arrangement according to claims 14 or 15 comprising two or more feedthrough elements (100); wherein the feedthrough elements (100) are adapted to be arranged in two rows within the frame (202) at least along a part of the width of the frame (202).
